# EUROPÄISCHE PATENTSCHRIFT

(11) **EP 0 544 941 B1**
(45) Veröffentlichungstag und Bekanntmachung des Hinweises auf die Patenterteilung: **23.10.1996**
(21) Anmeldenummer: 91120948.4
(22) Anmeldetag: 06.12.1991
(51) Int. Cl.: H04N 5/217, H04N 5/33, H04N 1/04

(54) **Verfahren zur Qualitätsverbesserung von Zeilenbildern**
Process for improving the quality of line images
Procédé d'amélioration de la qualité d'images en ligne

(43) Veröffentlichungstag der Anmeldung: 09.06.1993
(73) Patentinhaber: Menke, Josef-Ferdinand, Dipl.-Ing., D-24960 Glücksburg (DE)
(72) Erfinder: Menke, Josef-Ferdinand, Dipl.-Ing., D-24960 Glücksburg (DE)
(74) Vertreter: Riecke, Manfred

(56) Entgegenhaltungen:
- EP-A- 0 179 032
- PATENT ABSTRACTS OF JAPAN vol. 13, no. 38 (E-709)27. Januar 1989 & JP-A-63 234 765
- IEE PROCEEDINGS A. Bd. 134, Part A, Februar 1987, Stevenage GB. Seiten 225-236. JONES: 'Medical thermography'.

## Beschreibung

Die Erfindung betrifft ein Verfahren zur Qualitätsverbesserung eines mittels eines Multielement-Detektors aufgenommenen Fensehbildes.

Wärmebildgeräte, insbesondere Hochleistungsthermographen, erfordern den Einsatz von Multielement-Detektoren mit Elementzahlen in der Größenordnung von 100 und mehr Elementen. Das hat in bekannten Anordnungen (parallele Abtastung durch Anordnung der Elemente in Richtung der Bildhöhe) die unvermeidliche Folge einer Zeilenstruktur des Bildes, da alle Detektorelemente eine unterschiedliche Empfindlichkeit besitzen.

Grundsätzlich lassen sich diese unterschiedlichen Empfindlichkeiten zwar durch einen geeigneten Abgleich der Vorverstärker für jedes Detektorelement kompensieren, das aber nur für einen festen Satz von Parametern wie Gerätetemperatur, Temperatur der Szene, Kontrasteinstellung usw. Bei geänderten Betriebsbedingungen ergibt sich dann wieder die Zeilenstruktur.

Der Erfindung liegt die Aufgabe zugrunde, diese unvermeidliche Zeilenstruktur zu beseitigen.

Gemäß der Erfindung ist diese Aufgabe durch ein Verfahren gelöst, das die in den Ansprüchen angegebenen Merkmale aufweist.

Diese Merkmale beinhalten eine geeignete Bildüberlagerung und Strukturversetzung, wobei die Aufgabenlösung nur unter Zuhilfenahme der Trägheit des Auges bei der Betrachtung des Bildschirmes erreicht wird. Die Deckungswiederholung muß nämlich oberhalb der vom Auge noch auflösbaren Frequenz von ca. 10 Hz liegen.
An dieser Stelle muß erwähnt werden, daß die Helligkeitsschwankungen, die beseitigt werden sollen, im Bereich von 10% liegen.

Gemäß Anspruch 1 wird davon ausgegangen, daß die Zeilenstruktur um so besser aufgehoben wird, je mehr verschiedene Detektorelemente (während der Deckungswiederholungszeit) am Aufbau einer Bildzeile beteiligt sind.

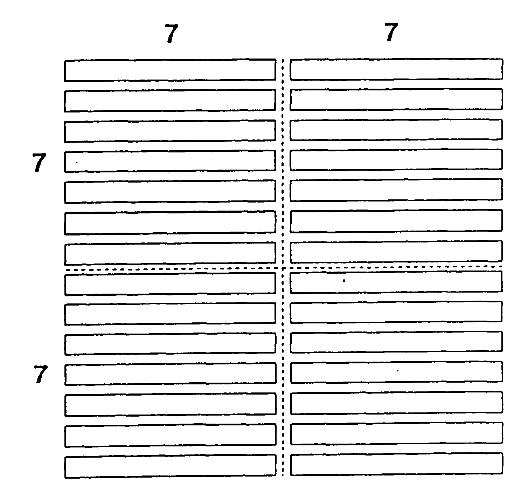

In der Zeichnung ist die Erfindung in einem Ausführungsbeispiel dargestellt. Ein solcher Realisierungsvorschlag sieht folgendermaßen aus:
Für einen der in der Figur dargestellten Detektor mit ca. 200 Elementen ist eine Detektorkonstruktion für einen seriellparallel Scan erforderlich, bei der 14 Elemente in Serie und 14 Elemente parallel angeordnet sind. Das ergibt eine Detektorzone von 2x2x7; wobei diese Betrachtungweise davon ausgeht, daß ein Sprite-Detektor etwa 7 Einzeldetektoren in Serie entspricht.

Diese vier Zonen bauen unabhängig voneinander vier Bilder auf, die durch Phasenschieber (time delay) und Speicher (memory) zur Deckung gebracht werden. Das ergibt eine Hochgeschwindigkeitsbildfolge im µs Bereich für die Zeile und eine Zeit von einigen 100 µs für die Paketfolge (420 µs bei 7 Elementen und CCIR-Norm).

Zusätzlich werden die Bilder in 20 ms Abständen (50 Halbbilder pro Sekunde nach CCIR-Norm) nochmals in der Zeilenfolge versetzt. So ergibt sich für siebener Pakete ein Wert von 50/7 Hz und in Verbindung mit zwei Doppelpaketen (2x2x7 Elemente) eine Frequenz von 28 Hz. Damit liegt man, für die gegebenen Kontrastwerte, oberhalb der vom Auge auflösbaren Frequenz. Die Zeilenfolge kann so gewählt werden, daß eine optimale Harmonisierung in der Gesamtstruktur entsteht; der Bildbeginn kann folgendermaßen aussehen:
1. Bild - Zeile 1
2. Bild - Zeile 3
3. Bild - Zeile 5
4. Bild - Zeile 7
5. Bild - Zeile 2
6. Bild - Zeile 4
7. Bild - Zeile 6
8. Bild - Zeile 1

In diesem Ausführungsbeispiel beträgt die Periodizität mithin 7 Bilder. Erst das achte Bild hat die gleiche Zuordnung Detektorelement/Zeile wie das erste. Allein durch den Zeilenversatz kann das Auge über sieben Bilder integrieren.

Insgesamt werden drei verschiedene Überlagerungen ausgenutzt:
1. Überlagerung durch parallel Detektoren
2. Überlagerung durch serielle Detektoren
3. Überlagerung durch Zeilenwechsel

## Patentansprüche

1. Verfahren zur Homogenisierung und Qualitätsverbesserung eines mittels eines Multielementdetektors mit unabhängigen Elementgruppen aufgenommenen Fernsehbildes, dadurch gekennzeichnet, daß von unabhängigen Elementgruppen getrennt erzeugte Bildraster durch Phasenschieber überlagert und zusätzlich durch Zeilensprung gemischt werden.

2. Verfahren nach Anspruch 1, dadurch gekennzeichnet, daß mehrere Multielementdetektoren in serieller Anordnung verwendet werden.

3. Verfahren nach Anspruch 1, dadurch gekennzeichnet, daß mehrere Multielementdetektoren in paralleler Anordnung verwendet werden.

4. Verfahren nach den Ansprüchen 1 - 3, dadurch gekennzeichnet, daß mehrere Multielementdetektoren in gleichzeitig serieller und paralleler Anordnung verwendet werden.

## Claims

1. Method for homogenisation and quality improvement of a television image received by means of a multi-element detector with independent element groups, characterised thereby that picture rasters separately produced by independent element groups are superimposed by phase shifters and additionally mixed by line jump.

2. Method according to claim 1, characterised thereby that several multi-element detectors are used in serial arrangement.

3. Method according to claim 1, characterised thereby that several multi-element detectors are used in parallel arrangement.

4. Method according to claims 1 to 3, characterised thereby that several multi-element detectors are used in simultaneous serial and parallel arrangement. "

## Revendications

1. Procédé pour homogénéiser et améliorer la qualité d'une image de télévision enregistrée à l'aide d'un détecteur à éléments multiples, comportant des groupes indépendants d'éléments, caractérisé en ce que des trames d'image, produites séparément par des groupes indépendants d'éléments, sont superposées par des déphaseurs et sont mélangées en supplément au moyen d'un saut de ligne.

2. Procédé selon la revendication 1, caractérisé en ce qu'on utilise plusieurs détecteurs à éléments multiples selon une disposition en série.

3. Procédé selon la revendication 1, caractérisé en ce qu'on utilise plusieurs détecteurs à éléments multiples selon une disposition en parallèle.

4. Procédé selon les revendications 1-3, caractérisé en ce qu'on utilise plusieurs détecteurs à éléments multiples selon une disposition simultanément en série et en parallèle.
